# EUROPÄISCHE PATENTANMELDUNG

(11) **EP 1 873 510 A2**
(43) Veröffentlichungstag der Anmeldung: **02.01.2008**
(21) Anmeldenummer: 07010396.5
(22) Anmeldetag: 24.05.2007
(51) Int. Cl.: G01N 1/40, G01N 21/25

(54) **Verfahren zur Analyse einer Flüssigkeit aus einem Flüssigkeitsstrom oder -vorrat, sowie Vorrichtung zur Durchführung dieses Verfahrens**

(30) Priorität: 30.06.2006 DE 102006030310
(71) Anmelder: Technotrans AG, 48336 Sassenberg (DE)
(72) Erfinder: Wieschebrock, Dirk, 49545 Tecklenburg-Brochterbeck (DE)
(74) Vertreter: Steinmeister, Helmut

(57) **Zusammenfassung**

Verfahren zur Analyse einer Flüssigkeit aus einem Flüssigkeitsstrom oder - Vorrat, gekennzeichnet durch die folgenden Schritte:
- Überführen einer Probe aus dem Flüssigkeitsstrom oder -Vorrat in die Gasphase,
- Einleiten der gasförmigen Probe in einen Meßbereich (14),
- Analyse der gasförmigen Probe hinsichtlich mindestens eines Bestandteils.

## Beschreibung

Die vorliegende Erfindung betrifft ein Verfahren zur Analyse einer Flüssigkeit aus einem Flüssigkeitsstrom oder -vorrat.

In industriellen Prozessen, in welchen Flüssigkeiten als Medien oder Verbrauchsmittel zum Einsatz kommen, ist es häufig notwendig, diese Flüssigkeiten einer ständigen Analyse bezüglich ihrer Zusammensetzung zu unterziehen, beispielsweise zur Qualitätskontrolle. Die Verwendung flüssiger Medien in der Druckindustrie stellt hierfür einen speziellen Anwendungsfall dar. Damit ein gleichbleibend gutes Druckergebnis erzielt wird, müssen die der Druckmaschine zugeführten Flüssigkeiten ständig bezüglich ihrer Zusammensetzung untersucht werden.

Zu diesem Zweck wurden bisher Sonden unmittelbar in die Flüssigkeit eingetaucht, beispielsweise in eine Probe, die vom zu untersuchenden Flüssigkeitsstrom abgezweigt wird. Dieses Verfahren weist allerdings eine Reihe von Nachteilen auf. Die Sonde und deren Bestandteile, insbesondere die empfindlichen Sensoren, können durch chemische Komponenten der Flüssigkeit angegriffen werden. Ferner kann die Sonde selbst das Fluid kontaminieren. Die elektronischen Bauteile der Sonde müssen vor der Flüssigkeit geschützt sein, so dass die Konstruktion der Sonde aufwendig ist. Schließlich muß bei der Messung die Temperatur des analysierten Mediums in Betracht gezogen werden, welche im Verarbeitungsprozeß Schwankungen unterliegen kann.

Es ist daher eine Aufgabe der vorliegenden Erfindung, ein Analyseverfahren zu schaffen, das eine Untersuchung der in dem Flüssigkeitsstrom oder -vorrat geführten bzw. vorgehaltenen Flüssigkeit ermöglicht, ohne daß eine Meßsonde in die Flüssigkeit eingetaucht werden muß.

Diese Aufgabe wird erfindungsgemäß durch ein Verfahren mit den Merkmalen des Anspruchs 1 gelöst.

Bei dem erfindungsgemäßen Verfahren wird zunächst eine zu analysierende Probe aus dem Flüssigkeitsstrom oder -vorrat in die Gasphase überführt. Die nun gasförmige Probe wird in einen Meßbereich wie beispielsweise eine entsprechend ausgestattete Meßkammer eingeleitet, in welchem eine Analyse der Probe in Bezug auf einen oder mehrere Bestandteile vorgenommen werden kann. Durch geeignete Meßeinrichtungen läßt sich somit feststellen, ob und gegebenenfalls in welcher Konzentration ein bestimmter Inhaltsstoff in der Flüssigkeit enthalten ist.

Das vorgeschlagene Analyseverfahren vermeidet die oben beschriebenen Nachteile, die beim Eintauchen einer Sonde in die Flüssigkeit auftreten. Da die Untersuchung auf eine entnommene Flüssigkeitsprobe beschränkt ist und in einem vom Flüssigkeitsstrom oder -vorrat getrennten Meßbereich stattfindet, wird eine Kontamination des zu analysierenden Mediums vermieden. Die Trennung der Flüssigkeit von den elektronischen Bestandteilen der Meßeinrichtungen ist hierdurch in einfacher Weise möglich. Ferner ist es von Vorteil, dass die Messung unter kontrollierten Bedingungen im Meßbereich stattfinden kann, insbesondere bei einer vorbestimmten Temperatur der Probe.

Weitere Ausgestaltungen des erfindungsgemäßen Verfahrens ergeben sich aus den Unteransprüchen 2 bis 16. Die weiteren Ansprüche 17 bis 30 betreffen eine Vorrichtung zur Durchführung des erfindungsgemäßen Analyseverfahrens.

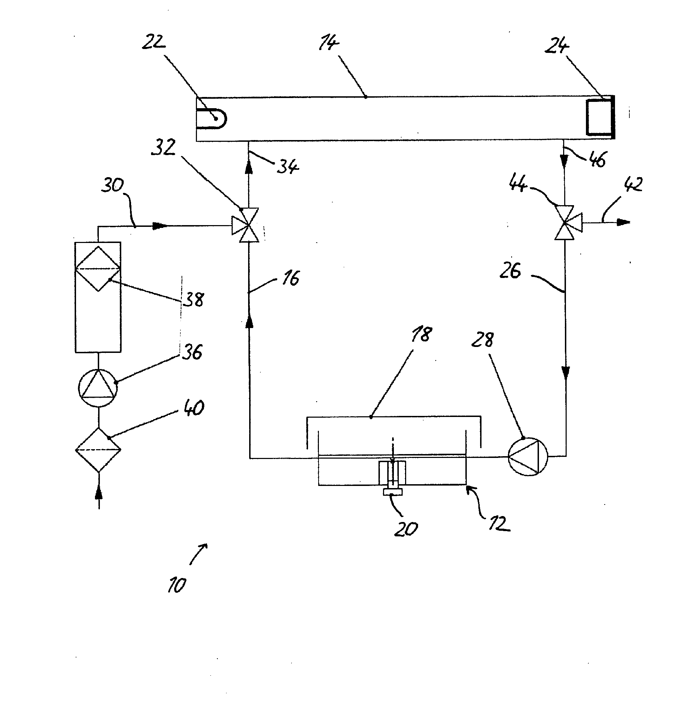

Im folgenden wird ein bevorzugtes Ausführungsbeispiel der Erfindung anhand der beigefügten Zeichnung näher erläutert.

Die einzige Figur ist eine schematische Darstellung einer Ausführungsform einer Vorrichtung zur Durchführung des erfindungsgemäßen Verfahrens.

Die in der Figur dargestellte Analysevorrichtung 10 umfaßt eine Verdampfungskammer 12 und eine Meßkammer 14, in welche ein Gas von der Verdampfungskammer 12 aus über eine Zuleitung 16 eingeleitet werden kann.

Wie weiter unten noch näher beschrieben wird, ist die Meßkammer 14 dazu vorgesehen, ein optisches Absorptionsspektrum des Gases aufzunehmen und auf diese Weise die Zusammensetzung des Gases zu bestimmen und Rückschlüsse auf die Konzentrationen der darin enthaltenen Bestandteile zu erhalten.

Die Verdampfungskammer 12 ist dazu vorgesehen, eine Probe einer Flüssigkeit aufzunehmen und durch Verdampfen in die Gasphase zu überführen. Zu diesem Zweck weist die Verdampfungskammer 12 einen Probenhalter auf, in welchen ein Zellstoffpad einlegbar ist, das mit einem vorbestimmten Flüssigkeitsvolumen geimpft ist. Durch einen Deckel 18 ist die Verdampfungskammer 12 gasdicht verschließbar. Bei der hier gezeigten Ausführungsform umfaßt die Verdampfungskammer 12 eine Heizeinrichtung, die das Verdampfen der Flüssigkeitsprobe fördert. Ein Temperatursensor 20 dient zur Kontrolle der Verdampfungstemperatur. Darüber hinaus besteht die Möglichkeit, den Probenhalter abweichend von der hier dargestellten Ausführungsform von seiner Unterseite her zu belüften und auf diese Weise den Verdampfungsprozeß zu fördern.

Die verdampfte und damit gasförmige Probe kann über die Zuleitung 16 in die Meßkammer 14 eingeleitet werden. Bei der Meßkammer 14 kann es sich beispielsweise um ein zylindrisches Rohr handeln, das an einem seiner Enden, welches in der vorliegenden Zeichnung links angeordnet ist, mit einer Infrarot-Strahlungsquelle 22 versehen ist, während sich am gegenüberliegenden, d. h. in der Zeichnung rechten Ende ein Infrarot-Sensor 24 befindet, so dass zwischen der Strahlungsquelle 22 und dem Sensor 24 eine freie Meßstrecke verbleibt, in der sich das eingeleitete Gas in der Meßkammer 14 befindet. Der Sensor 24 ist dazu vorgesehen, ein Spektrum der Strahlungsquelle 22 über einen vorbestimmten Spektralbereich hinweg aufzunehmen.

Befindet sich auf der Meßstrecke der Meßkammer 14 das zu analysierende Gas der Probe, nimmt der Sensor 24 ein Absorptionsspektrum auf, da das Gas bestimmte Spektrallinien der Infrarot-Strahlungsquelle 22 absorbiert. Bekanntlich läßt sich anhand eines solchen Absorptionsspektrums die Zusammensetzung der Probe ermitteln, das heißt, die enthaltenen chemischen Bestandteile sowie deren Konzentration im Gas. Das aufgenommene Absorptionsspektrum kann durch eine nicht näher dargestellte und an den Sensor 24 angeschlossene Analyseeinrichtung aufgezeichnet, abgespeichert und weiter verarbeitet werden. Es ist möglich, diesen Prozeß beispielsweise mit Hilfe eines Steuerprogramms weitgehend zu automatisieren.

Die Analysevorrichtung 10 umfaßt ferner eine Rückleitung 26 zur Rückführung des Gases aus der Meßkammer 14 in die Verdampfungskammer 12. Verdampfungskammer 12, Zuleitung 16, Meßkammer 14 und Rückleitung 26 bilden somit einen Kreislauf, in welchem das Probengas von der Verdampfungskammer 12 in die Meßkammer 14 und wieder zurück gepumpt werden kann. Hierzu dient eine Gaspumpe 28, die in der Rückleitung 26 angeordnet ist. Wahlweise ist es möglich, die Gaspumpe 28 in der Zuleitung 16 anzubringen.

Statt des Probengases kann wahlweise Luft in die Meßkammer 14 eingeleitet werden, damit in Abwesenheit eines Probengases ein Eichspektrum der Strahlungsquelle 22 vom Sensor 24 aufgenommen werden kann. Zu diesem Zweck mündet eine Belüftungsleitung 30 über ein 3/2-Wegeventil 32 in die Zuleitung 16. Das Ventil 32 ist zwischen zwei Stellungen schaltbar, in denen entweder die Verdampfungskammer 12 über die Zuleitung 16 zur oben beschriebenen Einleitung des Probengases an die Meßkammer 14 angeschlossen ist, während die Belüftungsleitung 30 blockiert ist, oder andererseits die Zuleitung 16 blockiert wird und Luft aus der Belüftungsleitung 30 über ein zwischen dem Ventil 32 und der Meßkammer 14 angeordnetes Reststück 34 der Zuleitung 16 zum Belüften in die Meßkammer 14 eingeleitet werden kann. Zum Aufbau eines ausreichenden Drucks in der Belüftungsleitung 30 dient eine Luftpumpe 36. Ein stromabwärts der Luftpumpe 36 angeordneter Aktivkohlefilter 38 und ein stromaufwärts der Luftpumpe 36 angeordneter Partikelfilter 40 dienen zur Reinigung der in die Meßkammer 14 einzuleitenden Luft.

Das Ausleiten der Luft aus dem Gaskreislauf, der durch die beiden Kammern 12,14 und die Leitungen 16,26 gebildet wird, geschieht durch eine Entlüftungsleitung 42, die an einem in der Rückleitung 26 befindlichen 3/2-Wegeventil 44 aus der Rückleitung 26 abzweigt. Analog zum Ventil 32 ist dieses Ventil 44 zwischen einer ersten Stellung, in welcher der Abzweig der Entlüftungsleitung 42 blockiert wird und die Meßkammer 14 und die Verdampfungskammer 12 durch die Rückleitung 26 verbunden sind, und einer zweiten Stellung schaltbar, in der der Rückstrom zur Verdampfungskammer 12 am Wegeventil 44 blockiert wird und eine Verbindung zwischen einem zwischen dem Ventil 44 und der Meßkammer 14 befindlichen Reststück 46 der Rückleitung 26 und der Entlüftungsleitung 42 freigegeben wird, so dass ein Gas von der Meßkammer 14 in die Entlüftungsleitung 42 strömen kann.

Mit Hilfe der zuvor beschriebenen Vorrichtung 10 läßt sich ein Verfahren zur Analyse einer Flüssigkeit durchführen, das nachfolgend im einzelnen beschrieben werden soll.

Aus einem Flüssigkeitsstrom wie etwa einem Flüssigkeitskreislauf in einem industriellen Prozeß oder einem Flüssigkeitsvorrat, der in einem Tank enthalten ist, wird eine Probe entnommen. Bei dieser Probe handelt es sich um ein vorbestimmtes Flüssigkeitsvolumen, das auf einen Träger wie etwa ein Zellstoffpad gebracht wird, das die Flüssigkeit aufsaugt. Das Zellstoffpad wird in den Probenhalter der Verdampfungskammer 12 eingelegt, und anschließend wird der Deckel 18 der Verdampfungskammer 12 gasdicht verschlossen. Durch Beheizen des Trägers wird die Flüssigkeit der Probe verdampft. Dieser Verdampfungsprozeß kann bei einer kontrollierten Temperatur durchgeführt werden, die durch den Temperatursensor 20 überwacht wird. Die nun in die Gasphase überführte Probe wird anschließend in die Meßkammer 14 eingeleitet. Dies geschieht durch Betrieb der Gaspumpe 28 in der Stellung der Wegeventile 32,44, in welcher sowohl die Belüftungsleitung 30 als auch die Entlüftungsleitung 42 blockiert sind und die Zuleitung 16 und die Rückleitung 26 die Verdampfungskammer 12 durchgehend mit der Meßkammer 14 verbinden, so dass ein Gaskreislauf geschaffen wird.

In der Meßkammer befindet sich die gasförmige Probe nun auf der Meßstrekke zwischen der Infrarot-Strahlungsquelle 22 und dem Sensor 24. Beim Betrieb der Strahlungsquelle 22 nimmt der Sensor 24 ein Absorptionsspektrum der gasförmigen Probe auf, das heißt, ein Spektrum der Strahlungsquelle 22, in welchem von den Molekülen des Probengases absorbierte Spektrallinien fehlen. Das vom Sensor 24 erfaßte Spektrum wird durch eine Analysevorrichtung aufgezeichnet und gespeichert. Es ist von Vorteil, die gasförmige Probe unter Erzeugung einer turbulenten Strömung in Verbindung mit einem Mediumspuffer in die Meßkammer 14 einzuleiten, da sich hierdurch Vorteile hinsichtlich der Meßgenauigkeit und der Meßreaktionszeit ergeben.

Nach Aufnahme des Spektrums kann die gasförmige Probe über die Rückleitung 26 bei blockierter Entlüftungsleitung 42 wieder in die Verdampfungskammer 12 zurückgeführt werden.

Die Analyse des auf die oben beschriebene Weise gemessenen Absorptionsspektrums kann unter Vergleich mit einem Eichspektrum der Strahlungsquelle 22 vorgenommen werden. Die Aufnahme des Eichspektrums geschieht in Abwesenheit einer Gasprobe von der Meßkammer 14, das heißt, in belüftetem Zustand. Hierzu werden sowohl das Ventil 32 als auch das Ventil 44 umgeschaltet, so dass der Gaskreislauf zwischen der Verdampfungskammer 12 und der Meßkammer 14 in beiden Leitungen 16,26 unterbrochen ist und Luft durch die Belüftungsleitung 30 in die Meßkammer 14 frei einströmen kann, während sie über die Entlüftungsleitung 42 wieder an die Umgebung abgegeben wird. Ist die Meßkammer 14 mit Luft gefüllt, nimmt der Sensor 24 ein Eichspektrum der Strahlungsquelle 22 auf, das wiederum durch die automatische Analyseeinrichtung aufgezeichnet wird und zum Vergleich mit dem Absorptionsspektrum der Gasprobe dient. Innerhalb der Belüftungsleitung 30 wird die einzuleitende Luft durch Filter 38,40 gereinigt. Nach der Aufnahme des Eichspektrums werden die Belüftungsleitung 30 und die Entlüftungsleitung 42 durch Umschalten der Ventile 32,44 wieder geschlossen, so dass der Gaskreislauf zwischen der Verdampfungskammer 12 und der Meßkammer 14 wieder hergestellt wird und die Vorrichtung 10 für die Analyse einer weiteren Probe zu Verfügung steht.

Bei der vorliegenden Ausführungsform erfolgt die Probenentnahme chargenweise, das heißt, es werden einzelne Probevolumina aufeinanderfolgend analysiert, so dass der Analyseprozeß diskontinuierlich in Meßzyklen durchgeführt wird. Es ist jedoch denkbar, die Verdampfungskammer 12 auf solche Weise abzuwandeln, dass ein dem Flüssigkeitsstrom bzw. dem Vorrat kontinuierlich abgezweigter Probenstrom eine entsprechend ausgebildete Verdampfungskammer 12 durchläuft, während das hierin erzeugte Probengas in einem ständigen Kreislauf durch die Meßkammer 14 gepumpt wird, in welcher in dichter Folge Absorptionspektren aufgezeichnet werden. Ferner sind Abwandlungen der Meßkammer 14 denkbar, beispielsweise für Einrichtungen zur Zwischenspeicherung der gasförmigen Probe im Kammervolumen, weitere Mittel zur Erzeugung einer turbulenten Strömung sowie Einrichtungen zur Vergrößerung der Oberfläche der Probe innerhalb der Kammer. Die Meßkammer 14 kann auch zur Aufnahme eines Emissionspektrums eines Gases dienen.

Schließlich ist es möglich, ergänzend zur Spektralanalyse weitere Untersuchungen vorzunehmen, indem entsprechende Meßgeräte an den Gaskreislauf angeschlossen werden, beispielsweise an die Zuleitung 16 oder an die Rückleitung 26.

Es wird angemerkt, daß das erfindungsgemäße Verfahren nicht auf eine Spektralanalyse der Probe beschränkt ist, sondern es können alternativ auch nicht optische Analyseverfahren eingesetzt werden. Ferner sind Abwandlungen der hier dargestellten Ausführungsform der Vorrichtung denkbar. Die Überführung der Flüssigkeitsprobe in die Gasphase muß nicht zwangsläufig innerhalb einer Verdampfungskammer im eigentlichen Sinn stattfinden, sondern kann auch in einem geeignet ausgestatteten Abschnitt einer Probenleitung vorgenommen werden, durch welche die Probe von der zu untersuchenden Flüssigkeit abgezweigt wird. Entsprechendes gilt für die Ausgestaltung der Meßkammer, die hier lediglich beispielhaft für einen räumlichen Bereich der Vorrichtung steht, der mit einer entsprechenden Meßanordnung zur qualitativen und gegebenenfalls quantitativen Untersuchung zumindest eines Inhaltsstoffs der Probe ausgestattet ist.

Das hier vorgeschlagene Verfahren sowie die dazu geeignete Vorrichtung eignen sich insbesondere zum Einsatz in industriellen Prozessen, in welchen Flüssigkeiten als Medien oder Verbrauchsmittel zum Einsatz kommen und in einem Kreislauf oder einem Zuleitungsstrom geführt werden oder zu diesem Zweck bevorratet werden, während dieses Prozesses jedoch einer ständigen Kontrolle unterliegen müssen. Ein besonderes Einsatzgebiet stellt hierbei die Druckindustrie dar, insbesondere die in einem Druckverfahren verwendeten Druckfarben sowie das Feuchtmittel. Für den mobilen Einsatz ist es denkbar, die gesamte Vorrichtung in ein kompaktes transportables Modul wie etwa einen Analysekoffer zu integrieren.

## Patentansprüche

1. Verfahren zur Analyse einer Flüssigkeit aus einem Flüssigkeitsstrom oder -Vorrat, **gekennzeichnet durch** die folgenden Schritte:
- Überführen einer Probe aus dem Flüssigkeitsstrom oder -Vorrat in die Gasphase,
- Einleiten der gasförmigen Probe in einen Meßbereich (14),
- Analyse der gasförmigen Probe hinsichtlich mindestens eines Bestandteils.

2. Verfahren gemäß Anspruch 1, **dadurch gekennzeichnet, daß** die Analyse der gasförmigen Probe eine qualitative und/oder eine quantitative Bestimmung mindestens eines Bestandteils der Probe umfaßt.

3. Verfahren gemäß Anspruch 2, **dadurch gekennzeichnet, daß** die Analyse der gasförmigen Probe die Aufnahme eines optischen Spektrums der Probe umfaßt.

4. Verfahren gemäß Anspruch 3, **dadurch gekennzeichnet, daß** es sich bei dem zur Analyse aufgenommenen optischen Spektrum um ein Absorptionsspektrum der Probe handelt.

5. Verfahren gemäß gemäß einem der vorhergehenden Ansprüche, **dadurch gekennzeichnet, daß** der Meßbereich (14) als Meßkammer ausgebildet ist.

6. Verfahren gemäß Anspruch 5 in Verbindung mit Anspruch 3 oder 4, **dadurch gekennzeichnet, daß** die Meßkammer (14) eine optische Strahlungsquelle (22) und einen Sensor (24) zur Aufnahme eines optischen Spektrums enthält.

7. Verfahren gemäß Anspruch 6, **dadurch gekennzeichnet, daß** in Abwesenheit der Probe von der Meßkammer (14) der Sensor (24) ein Eichspektrum der Strahlungsquelle (22) aufnimmt.

8. Verfahren gemäß Anspruch 7, **dadurch gekennzeichnet, daß** vor der Aufnahme des Eichspektrums Luft in die Meßkammer (14) eingeleitet wird.

9. Verfahren gemäß Anspruch 8, **dadurch gekennzeichnet, daß** die Luft vor dem Einleiten in die Meßkammer (14) gereinigt wird.

10. Verfahren gemäß einem der Ansprüche 7 bis 9, **dadurch gekennzeichnet, daß** die Analyse ferner einen Vergleich des vom Sensor (24) aufgenommenen Spektrums der Probe mit dem Eichspektrum umfaßt.

11. Verfahren gemäß einem der Ansprüche 5 bis 10, **dadurch gekennzeichnet, daß** beim Einleiten der Probe in die Meßkammer (14) eine turbulente Strömung erzeugt wird.

12. Verfahren gemäß einem der vorhergehenden Ansprüche, **dadurch gekennzeichnet, daß** die Probe ein vorbestimmtes Flüssigkeitsvolumen umfaßt, und daß die Entnahme von Proben aus dem Flüssigkeitsstrom oder -Vorrat diskontinuierlich erfolgt.

13. Verfahren gemäß einem der vorhergehenden Ansprüche, **dadurch gekennzeichnet, daß** das Überführen der Probe in die Gasphase innerhalb einer Verdampfungskammer (12) stattfindet.

14. Verfahren gemäß Anspruch 13, **dadurch gekennzeichnet, daß** nach der Analyse die Probe wieder in die Verdampfungskammer (12) zurückgeführt wird.

15. Verfahren gemäß einem der vorhergehenden Ansprüche, **dadurch gekennzeichnet, daß** die Probe zum Überführen der Probe in die Gasphase auf einen Träger aufgebracht und verdampft wird.

16. Verfahren gemäß einem der vorhergehenden Ansprüche, **dadurch gekennzeichnet, daß** die Probe zum Verdampfen beheizt wird.

17. Vorrichtung zur Durchführung des Verfahrens nach einer der vorhergehenden Ansprüche, **gekennzeichnet durch**
eine Einrichtung (12) zur Überführung einer flüssigen Probe in die Gasphase,
einen Meßbereich (14) mit einer Meßanordnung (22,24) zur Analyse der gasförmigen Probe hinsichtlich mindestens eines Bestandteils,
und eine Zuleitung (16) zum Einleiten der in die Gasphase überführten Probe in den Meßbereich (14).

18. Vorrichtung nach Anspruch 16, **dadurch gekennzeichnet, daß** der Meßbereich (14) als Meßkammer ausgebildet ist, und daß die Meßanordnung eine optische Strahlungsquelle (22) und einen optischer Sensor (24) umfaßt, welcher Sensor (24) dazu vorgesehen ist, ein Spektrum der Strahlungsquelle (22) aufzunehmen.

19. Vorrichtung nach Anspruch 18, **dadurch gekennzeichnet, daß** die Strahlungsquelle (22) eine Infrarot-Strahlungsquelle ist.

20. Vorrichtung nach einem der Ansprüche 17 bis 19, **dadurch gekennzeichnet, daß** die Einrichtung (12) zur Überführung einer flüssigen Probe in die Gasphase eine Verdampfungskammer umfaßt.

21. Vorrichtung nach Anspruch 20, **dadurch gekennzeichnet, daß** die Verdampfungskammer (12) einen Probenhalter zur Aufnahme einer Flüssigkeitsprobe umfaßt.

22. Vorrichtung nach Anspruch 20 oder 21, **dadurch gekennzeichnet, daß** die Verdampfungskammer (12) eine Heizung zum Beheizen einer Flüssigkeitsprobe umfaßt.

23. Vorrichtung nach einem der Ansprüche 20 bis 22 in Verbindung mit Anspruch 18 oder 19, **gekennzeichnet durch** eine Rückleitung (26) zur Rückführung des Gases aus der Meßkammer (14) in die Verdampfungskammer (12).

24. Vorrichtung nach einem der Ansprüche 17 bis 23, **dadurch gekennzeichnet, daß** in der Zuleitung (16) oder gegebenenfalls in der Rückleitung (26) eine Gaspumpe (28) angeordnet ist.

25. Vorrichtung nach einem der Ansprüche 18 bis 24, **gekennzeichnet durch** eine Belüftungsleitung (30) zum Einleiten von Luft in die Meßkammer (14).

26. Vorrichtung nach Anspruch 25, **dadurch gekennzeichnet, daß** die Belüftungsleitung (30) an die Zuleitung (16) mittels eines umschaltbaren Wegeventils (32) angeschlossen ist.

27. Vorrichtung nach Anspruch 25 oder 26, **dadurch gekennzeichnet, daß** in der Belüftungsleitung (30) eine Luftpumpe (36) angeordnet ist.

28. Vorrichtung nach einem der Ansprüche 25 bis 27, **dadurch gekennzeichnet, daß** in der Belüftungsleitung (30) mindestens ein Filter (38,40) zur Reinigung der in die Meßkammer (14) einzuleitenden Luft angeordnet ist.

29. Vorrichtung nach einem der Ansprüche 25 bis 28, **gekennzeichnet durch** eine Entlüftungsleitung (42) zum Ausleiten von Luft aus der Meßkammer (14).

30. Vorrichtung nach Anspruch 29, **dadurch gekennzeichnet, daß** die Entlüftungsleitung (42) an die Rückleitung (26) von der Meßkammer (14) zur Verdampfungskammer (12) mittels eines umschaltbaren Wegeventils (44) angeschlossen ist.
